# DEMANDE DE BREVET EUROPEEN

(11) **EP 0 666 671 A1**
(43) Date de publication de la demande: **09.08.1995**
(21) Numéro de dépôt: 95400161.6
(22) Date de dépôt: 25.01.1995
(51) Int. Cl.: H04L 29/06

(54) **Communication sur réseau numérique, avec anti-virus**

(30) Priorité: 01.02.1994 FR 9401091
(71) Demandeur: DASSAULT AUTOMATISMES ET TELECOMMUNICATIONS, F-78373 Plaisir Cédex (FR)
(72) Inventeur: Basset, Jean-Claude, F-75013 Paris (FR)
(74) Mandataire: Plaçais, Jean-Yves

(57) **Abrégé**

Un poste (1) émet, grâce à une interface de communication (15) et selon un protocole déterminé, des données de fichier, en direction de l'interface de communication (25) d'un poste récepteur (2). Ce poste récepteur (2) stocke temporairement les données émises par le poste émetteur (1) dans une mémoire spécifique (26) qui les soumet à un module chercheur anti-virus (220), avant qu'il ne les transforme en données utilisables par une unité de traitement (22), si la recherche anti-virus est négative.

## Description

L'invention concerne les réseaux de communication informatiques étendus, en particulier publics.

De façon générale, ces réseaux transmettent des informations ou données brutes. Mais on tend maintenant à les utiliser pour transmettre aussi des fichiers, qui sont un ensemble de données organisées.

En France par exemple, la Société FRANCE TÉLÉCOM a maintenant normalisé un protocole de transfert de fichiers dit STUDEL, et développé une application correspondante de transfert de fichiers dénommée TÉLÉDISQUETTE. Ce système de transfert de fichiers utilise le réseau numérique à intégration de services ou RNIS, commercialisé sous la Marque NUMÉRIS.

Le passage à des transferts de fichiers directement utilisables dans un micro-ordinateur présente de nombreux avantages. Tout d'abord le mode de mise en relation des utilisateurs, ainsi que les moyens logiciels de transfert, peuvent être standardisés, ce qui les rend multi-constructeurs et multi-utilisateurs. En outre, ce système peut être assorti d'un annuaire recensant les récepteurs à ce service, et aussi offrir des fonctions de diffusion automatique. En bref, on peut ainsi envisager une technique de transfert de fichiers par le réseau public, qui possède pratiquement les mêmes caractéristiques de convivialité que la téléphonie vocale actuelle.

Il reste qu'un tel système est vulnérable à la transmission de fichiers qui incluraient un agent intrus et/ou nocif, tel qu'un virus informatique.

La présente invention vient apporter une solution à ce problème.

Elle part d'un dispositif de communication informatique, qui comprend :
- au moins un poste émetteur muni d'une unité de traitement avec une mémoire de travail, une mémoire de masse, et une interface de communication,
- au moins un poste récepteur muni d'une unité de traitement avec une mémoire de travail, une mémoire de masse, et une interface de communication,
- les deux interfaces de communication étant aptes à dialoguer à travers un réseau numérique d'accès public, et les deux postes étant munis de modules de communication respectifs d'émetteur et de récepteur conformes à un protocole prédéterminé, propre au transfert de fichiers.

Selon l'invention, le poste récepteur comporte une partie de mémoire spécifique, éligible comme inapte en général aux échanges avec son unité de traitement, sauf éventuellement pour le module de communication de récepteur, ainsi qu'un module chercheur anti-virus ; le module de communication stocke les données de fichier incidentes dans ladite partie de mémoire de masse spécifique ; il les soumet au module chercheur anti-virus avant de les transformer en un fichier utilisable et de les rendre accessibles d'une manière générale à l'unité de traitement.

Le module anti-virus peut opérer sur les données de fichier reçues en série pendant leur réception. Il peut également opérer sur le regroupement des données du fichier, par exemple dans un fichier temporaire, avant leur transformation en fichier utilisable.

Bien entendu les rôles des émetteurs et des récepteurs ne sont pas figés comme indiqué, et on peut imaginer qu'un émetteur soit également récepteur, et réciproquement.

Plus généralement, le module de communication d'émetteur peut être muni de moyens anti-virus comme celui d'un récepteur.

On peut encore prévoir un mode spécial, par lequel le module récepteur est propre à substituer au module anti-virus en cours une version mise à jour de celui-ci, reçue de l'émetteur, après contrôle de la version mise à jour par la version précédente disponible.

D'autres caractéristiques et avantages de l'invention apparaîtront à l'examen de la description détaillée ci-après, et des dessins annexés, sur lesquels :
- la figure 1 illustre de façon générale des émetteurs et des récepteurs interconnectés par le réseau numérique public ;
- la figure 2 est un schéma de principe restreint à un poste émetteur et un poste récepteur ; et
- les figures 3 et 4 sont deux schémas partiels détaillés illustrant deux variantes de mise en oeuvre de la présente invention.

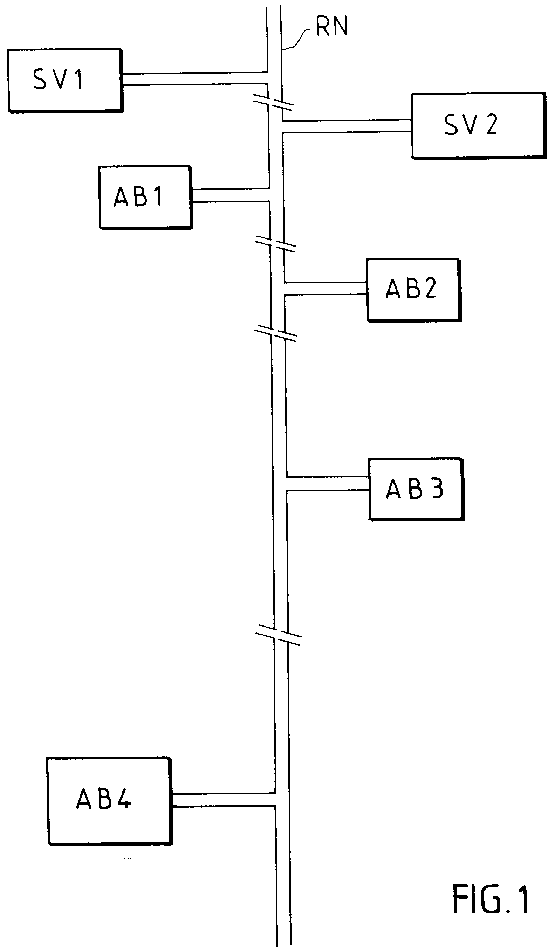

Sur la figure 1, la référence RN désigne un réseau numérique étendu, ou public, comme le réseau numérique à intégration de services connu en France sous la dénomination "Numéris".

A ce réseau peuvent être connectés des émetteurs SV1 et SV2, ainsi que des récepteurs AB1 à AB4.

Les postes émetteurs et récepteurs sont par exemple (non limitatif) agencés à la manière d'installations micro-informatiques.

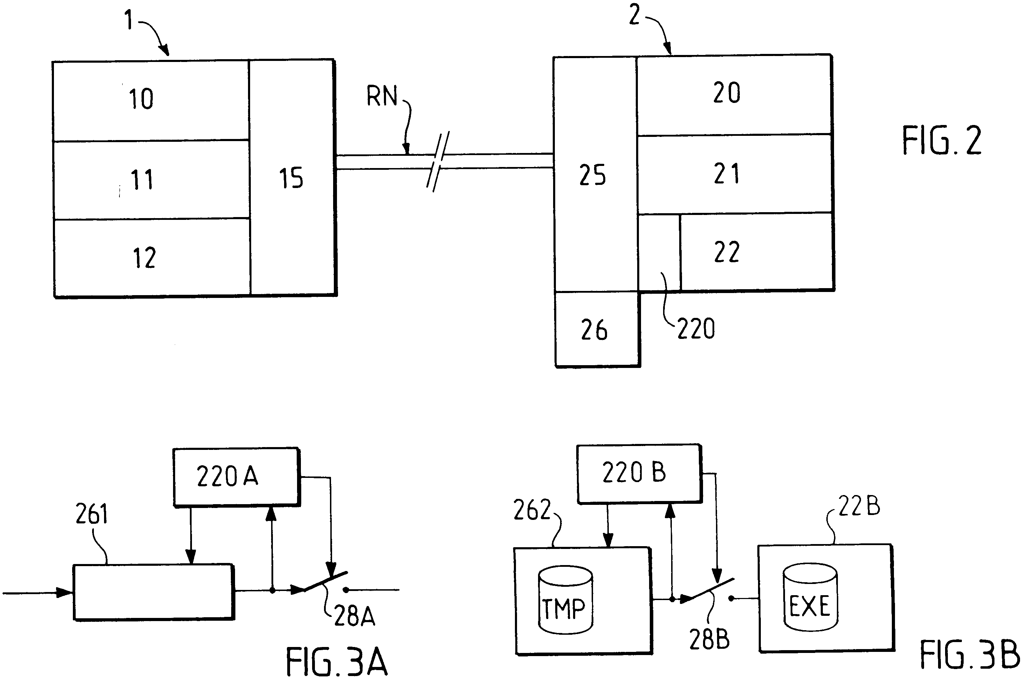

Ainsi, sur la figure 2, l'émetteur 1 comporte une unité de traitement 10 avec une mémoire de travail 11 et une mémoire de masse 12, ainsi qu'une interface de communication 15, qui peut également comporter des fonctions électroniques.

De même, le poste récepteur 2 est muni d'une unité de traitement 20, d'une mémoire de travail 21, d'une mémoire de masse 22 et d'une interface de communication 25 qui peut elle aussi avoir des fonctions intégrées.

Les deux interfaces de communication 15 et 25 sont aptes à dialoguer à travers le réseau numérique RN. Les deux postes sont munis de modules de communication respectifs d'émetteur et de récepteur, opérant par exemple conformément à l'application de transfert TELEDISQUETTE, qui permet le transfert de fichiers, et s'appuie sur le protocole normalisé STUDEL déjà cité, (également désigné par EUROFILE TRANSFER dans une norme ETS des EUROPEAN TELECOMMUNICATION STANDARD INSTITUTES).

Un système de transfert de fichiers possède en général ses propres dispositifs de sécurité, par code d'accès et authentification par exemple, ce qui nécessite l'accord conjoint de l'émetteur et du récepteur.

Cependant l'ouverture d'un tel service à l'ensemble des utilisateurs implique que certains fichiers pourront être transmis sans l'accord préalable des intéressés, donc sans mise en oeuvre des dispositifs de sécurité internes du système de transfert de fichiers.

Ainsi, un fichier transféré peut se trouver infecté par un virus informatique.

Un virus informatique est une séquence de données introduite dans un logiciel et/ou un fichier, et qui peut déclencher des actions néfastes au fonctionnement normal du système informatique qui l'héberge. On sait qu'un virus peut être par exemple actif, passif ou déclenché.

Parmi les techniques anti-virus connues, on peut mettre à part celles qui se contentent de détecter la présence d'un virus, en remarquant ses effets, après qu'ils se soient produits. Cette détection des virus par leurs effets avérés n'est guère applicable ici: par son principe elle signifie que le virus a déjà pu infecter de nombreux fichiers locaux.

Les techniques les plus performantes repèrent les virus informatiques d'après leur structure, et/ou dès qu'ils commencent à agir. Autant que possible, elles corrigent les effets du virus détecté, le cas échéant. C'est ce qu'on appelle ici un "chercheur de virus".

Mais les virus sont très variés, et leurs créateurs imaginatifs. Des virus nouveaux apparaissent régulièrement. Il est souhaitable de procéder à des mises à jour régulières de l'outil chercheur anti-virus, pour tenir compte de nouvelles structures de virus récemment relevées.

L'application classique de ces chercheurs de virus nécessite de nombreuses manipulations manuelles, à effectuer chaque fois que l'on reçoit de nouveaux fichiers, que ce soit par une disquette, ou d'une autre manière. Il est d'ailleurs préférable de placer sur disquette les fichiers suspects pour les vérifier.

Selon l'invention, le poste récepteur 2 comporte une partie de mémoire spécifique, représentée ici en 26 à côté de l'interface de communication 25.

Par des moyens matériels ou logiciels, cette mémoire spécifique 26 est éligible comme inapte en général aux échanges avec son unité de traitement 20, sauf éventuellement pour le module de communication récepteur 25.

Une façon de faire consiste à munir l'installation informatique d'un second disque dur indépendant, et accessible seulement à l'interface de communication 25, laquelle comporte alors des moyens convenables de gestion d'un tel disque dur.

Une autre façon de procéder consiste, dans les systèmes d'exploitation admettant des privilèges d'accès aux fichiers en lecture et écriture, à faire en sorte qu'une partie de la mémoire de masse 22 soit strictement réservée en lecture et écriture au module de communication 25, au moins lorsque celui-ci est en opération.

Une troisième façon de procéder pourrait consister à réserver simplement l'accès à des fichiers pour l'interface de communication 25, en prenant soin de donner à ces fichiers des caractéristiques telles qu'ils ne puissent être utilisables par l'unité de traitement 20, tout particulièrement comme des fichiers de programmes, que l'on appelle encore fichiers exécutables.

Un module chercheur anti-virus 220 est implanté soit dans la mémoire de masse 22, soit dans la partie de mémoire additionnelle 26, lorsque celle-ci dispose de suffisamment de place.

Le module de communication 25 stocke l'intégralité des données de fichiers incidentes dans la partie de mémoire de masse 26, et il les soumet au module chercheur anti-virus, avant de les transformer en un fichier utilisable, qui soit de surcroît rendu accessible de façon générale (c'est-à-dire sans réserve) à l'unité de traitement 20.

On a indiqué plus haut que la mémoire 26 peut être une mémoire de masse directement accessible à l'interface de communication 25. Sur la figure 3A, cette mémoire est illustrée en 261 sous la forme d'une mémoire ou d'un registre de grande capacité, dont l'adressage et la lecture sont réservés au module anti-virus, illustré en 220A, lequel n'autorise l'accès aux données reçues (ce qui est schématisé par la fermeture d'un interrupteur 28A), que lorsqu'il a pu assurer que les données reçues sont dénuées de tout virus connu.

En d'autres termes, le module anti-virus 220A opère ici sur les données du fichier reçues en série, pendant leur réception.

L'homme du métier saura en effet réaliser à partir de la figure 3A un dispositif à plusieurs sections dans la mémoire 261, qui permette de recevoir en série des données tout en les contrôlant et en les laissant sortir également en série par fermeture convenable de l'interrupteur 28A.

De préférence (au moins pour les fichiers de grande taille), le module anti-virus opère sur le regroupement des données en fichiers. C'est ce qui est illustré sur la figure 3B.

La mémoire de masse 26 est alors un disque dur additionnel 262, où l'on peut stocker par exemple, sous la forme de fichiers temporaires (notés par "TMP"), l'ensemble des données reçues depuis l'émetteur.

Le contrôle peut alors s'effectuer après la réception complète du fichier, par le module anti-virus illustré ici en 220B, et qui comme précédemment possède l'accès d'adressage et de lecture au disque dur 262.

Lorsque son contrôle est terminé, le module 220B autorise l'accès, schématisé par la fermeture de l'interrupteur 28B, à la mémoire de masse principale 22B du poste récepteur 2, où le fichier reçu peut être par exemple transformé en fichier exécutable (ce qui est noté par la marque "EXE").

De façon totalement inconnue du module émetteur, le module récepteur peut ainsi vérifier que tous les fichiers reçus sont dénués de tout virus.

Bien entendu, un contrôle de même nature peut être effectué au niveau du module émetteur.

De plus, on peut utiliser dans le module émetteur exactement la même structure que dans le module récepteur, si le besoin s'en fait sentir, et en particulier si le émetteur peut également jouer le rôle récepteur pour d'autres émetteurs.

Le module anti-virus 220 peut devoir, pour des raisons déjà indiquées, être modifié pour incorporer de nouvelles versions de virus récemment découvertes.

Une variante intéressante de l'invention consiste à transmettre les modules anti-virus depuis un émetteur.

Dans ce cas, le module récepteur recevra un ordre spécial, représentatif d'un mode spécial de travail. Il reçoit le module anti-virus nouveau ou mis à jour comme tout autre fichier. Mais, après vérification de celui-ci par le module anti-virus dont il disposait jusqu'à présent, il va pouvoir remplacer ce dernier par le nouveau module anti-virus, si du moins le contrôle a été négatif.

Bien entendu la présente invention n'est pas limitée au mode de réalisation décrit. Elle s'étend à toute variante que pourra développer l'homme du métier, en particulier dans le cadre des revendications ci-après.

Pour des raisons aisément compréhensibles, la présente description n'entre pas dans le détail des structures connues de virus informatiques, ni des différentes variantes de l'invention qui peuvent en découler.

Ceci étant, le mot "virus informatique" est à prendre ici au sens large, couvrant tout agent, intrus ou ajouté délibérément, susceptible d'avoir une action néfaste ou nocive, même bénigne, sur un système informatique. On sait que l'action néfaste peut simplement consister à occuper inutilement de la place en mémoire vive ou en mémoire de masse. Ainsi, l'invention peut s'appliquer non seulement aux "virus" proprement dits, qui infectent un système informatique en se propageant et se multipliant, parallèlement à leur action nocive (comme les virus biologiques), mais aussi notamment à leurs variantes logicielles comme les "chevaux de Troie", les "bombes", et les "vers".

De telles variantes existent en ce qui concerne le réseau utilisé:
- le service décrit ci-dessus (RNIS/SND-Numéris) opère en mode "circuit", c'est-à-dire relie les deux stations en simulant une connexion directe entre elles;
- l'invention peut aussi s'appliquer aux modes de transmission dits "datagramme" ou par paquets (norme X25), dans lesquels les différents groupes ou paquets de données peuvent passer par des chemins différents. La taille de la mémoire utilisée pour regrouper les données est ajustée en conséquence.

Des variantes existent également en ce qui concerne le rôle des stations:
- dans un mode "à serveur", il existe un nombre limité de stations (les serveurs) qui ont vocation à transmettre des fichiers à des stations ordinaires (les abonnés), dans le cadre de liaisons point-à-point via un réseau public ou étendu. Ceci convient aux organisations qui ont un service centralisé, par exemple pour la télédiffusion, le téléchargement ou la télémaintenance de logiciels.
- dans un autre mode ("à station"), on considère simplement des stations émettrice et réceptrice, ou plus fréquemment émettrices/réceptrices. Ce sont par exemple les abonnés du mode à serveur qui dialoguent directement entre eux pour l'échange de fichiers.

## Revendications

1. Dispositif de communication informatique, du type comprenant:
- au moins un poste émetteur (1) muni d'une unité de traitement (10) avec une mémoire de travail (11), une mémoire de masse (12), et une interface de communication (15),
- au moins un poste récepteur (2) muni d'une unité de traitement (20) avec une mémoire de travail (21), une mémoire de masse (22), et une interface de communication (25),
- les deux interfaces de communication (15,25) étant aptes à dialoguer à travers un réseau numérique d'accès (RN), et les deux postes étant munis de modules de communication respectifs d'émetteur et de récepteur conformes à un protocole prédéterminé, propre au transfert de fichiers,
caractérisé en ce que le poste récepteur (2) comporte une partie de mémoire spécifique (26), éligible comme inapte en général aux échanges avec son unité de traitement, sauf pour le module de communication récepteur, ainsi qu'un module chercheur anti-virus (220), en ce que le module de communication (25) stocke les données de fichier incidentes dans ladite partie de mémoire de masse (26), et en ce qu'il les soumet au module chercheur anti-virus (220) avant de les transformer en un fichier utilisable et de les rendre accessible d'une manière générale à l'unité de traitement.

2. Dispositif selon la revendication 1, caractérisé en ce que le module anti-virus (220A) opère sur les données de fichier reçues en série, pendant leur réception (261).

3. Dispositif selon l'une des revendications 1 et 2, caractérisé en ce que le module anti-virus (220B) opère sur le regroupement des données de fichier (262), avant leur transformation en fichier utilisable (22B).

4. Dispositif selon l'une des revendications précédentes, caractérisé en ce que le module de communication (15) d'émetteur est muni de moyens anti-virus comme celui d'un récepteur.

5. Dispositif selon l'une des revendications précédentes, caractérisé en ce qu'en un mode spécial, le module récepteur est propre à substituer au module anti-virus en cours une version mise à jour de celui-ci, reçue de l'émetteur, après contrôle de la version mise à jour par la précédente.

6. Dispositif selon l'une des revendications précédentes, caractérisé en ce que ladite partie de mémoire spéciale (26) est une partie de la mémoire de masse, ou une mémoire de masse additionnelle (22B).

7. Dispositif selon l'une des revendications précédentes, caractérisé en ce que le protocole de communication est un protocole normalisé d'usage public.
